(19) Europäisches Patentamt
European Patent Office
Office européen des brevets

(11) **EP 2 576 163 B1**

(12) **EUROPÄISCHE PATENTSCHRIFT**

(45) Veröffentlichungstag und Bekanntmachung des Hinweises auf die Patenterteilung:
**26.11.2014  Patentblatt 2014/48**

(21) Anmeldenummer: **11721537.6**

(22) Anmeldetag: **26.05.2011**

(51) Int Cl.:
*C08G 18/62* (2006.01)  *C08G 18/76* (2006.01)
*C08K 5/00* (2006.01)  *C08G 18/32* (2006.01)
*C08L 33/02* (2006.01)  *C08L 35/00* (2006.01)
*C08L 75/00* (2006.01)  *C08L 97/02* (2006.01)

(86) Internationale Anmeldenummer:
**PCT/EP2011/058632**

(87) Internationale Veröffentlichungsnummer:
**WO 2011/147909 (01.12.2011 Gazette 2011/48)**

(54) **BINDEMITTEL FÜR KÖRNIGE UND/ODER FASERFÖRMIGE SUBSTRATE**

BINDER FOR GRANULAR AND/OR FIBROUS SUBSTRATES

LIANT POUR SUBSTRATS SOUS FORME DE GRAINS ET/OU DE FIBRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.05.2010  EP 10164005**

(43) Veröffentlichungstag der Anmeldung:
**10.04.2013  Patentblatt 2013/15**

(73) Patentinhaber: **BASF SE**
**67056 Ludwigshafen (DE)**

(72) Erfinder: **KALBE, Michael**
**69469 Weinheim (DE)**

(56) Entgegenhaltungen:
**EP-A1- 1 203 647    WO-A1-97/31059**
**WO-A1-2008/152018    WO-A2-2009/101100**
**US-A- 5 908 496**

## Beschreibung

Gegenstand der vorliegenden Erfindung ist ein Bindemittel für körnige und/oder faserförmige Substrate, enthaltend als wirksame Bestandteile

a) ein durch radikalische Polymerisation erhältliches Polymerisat, welches

| | |
|---|---|
| 5 bis 100 Gew.-% | wenigstens einer ethylenisch ungesättigten $C_3$- bis $C_6$-Mono- oder Dicarbonsäure (Monomer A1), und |
| 0 bis 95 Gew.-% | wenigstens einer anderen ethylenisch ungesättigten Verbindung, welche mit den Monomeren A1 copolymerisierbar ist (Monomer A2), |

in einpolymerisierter Form enthält, wobei sich die Monomerenmengen A1 und A2 zu 100 Gew.-% addieren [Polymerisat A],

b) eine organische Verbindung, welche wenigstens zwei funktionelle Gruppen, ausgewählt aus der Gruppe umfassend Hydroxy-, Epoxy-, primäre und sekundäre Aminogruppen, enthält [Vernetzer B], und

c) eine organische Verbindung, welche wenigstens zwei Isocyanatgruppen enthält [Isocyanat C].

Gegenstand der vorliegenden Erfindung ist ebenfalls ein Verfahren zur Herstellung von Formkörpern unter Verwendung von körnigen und/oder faserförmigen Substraten und dem Bindemittel sowie die Formkörper selbst.

Die Verfestigung von faserförmigen oder körnigen Substraten, insbesondere in flächenförmigen Gebilden, wie beispielsweise Faservliesen, Faserplatten, Korkplatten oder Spanplatten etc., erfolgt häufig auf chemischem Weg unter Verwendung eines polymeren Bindemittels. Zur Erhöhung der Festigkeit, insbesondere der Nass- und Wärmestandfestigkeit, werden vielfach Bindemittel eingesetzt, welche Formaldehyd abspaltende Vernetzer enthalten. Damit besteht aber die Gefahr der unerwünschten Formaldehydemission.

Zur Vermeidung von Formaldehydemissionen wurden bereits zahlreiche Alternativen zu den bisher bekannten Bindemitteln vorgeschlagen. So sind aus der US-A 4,076,917 Bindemittel bekannt, welche Carbonsäure- oder Carbonsäureanhydrid-haltige Polymerisate und β-Hydroxyalkylamide als Vernetzer enthalten. Nachteilig ist die relativ aufwendige Herstellung der β-Hydroxyalkylamide.

Aus der EP-A-445578 sind Platten aus feinteiligen Materialien, wie beispielsweise Glasfasern bekannt, in denen Mischungen aus hochmolekularen Polycarbonsäuren und mehrwertigen Alkoholen, Alkanolaminen oder mehrwertigen Aminen als Bindemittel fungieren.

Aus der EP-A-583086 sind formaldehydfreie, wässrige Bindemittel zur Herstellung von Faservliesen, insbesondere Glasfaservliesen, bekannt. Die Bindemittel enthalten eine Polycarbonsäure mit mindestens zwei Carbonsäuregruppen und gegebenenfalls auch Anhydridgruppen sowie ein Polyol. Diese Bindemittel benötigen einen phosphorhaltigen Reaktionsbeschleuniger, um ausreichende Festigkeiten der Glasfaservliese zu erreichen. Es wird darauf hingewiesen, dass auf die Anwesenheit eines derartigen Reaktionsbeschleunigers nur verzichtet werden kann, wenn ein reaktives Polyol eingesetzt wird. Als hochreaktive Polyole werden β-Hydroxyalkylamide genannt.

Die EP-A-651088 beschreibt entsprechende Bindemittel für Substrate aus Cellulosefaser. Diese Bindemittel enthalten zwingend einen phosphorhaltigen Reaktionsbeschleuniger.

Die EP-A-672920 beschreibt formaldehydfreie Binde-, Imprägnier- oder Beschichtungsmittel, die ein Polymerisat, welches zu 2 bis 100 Gew.-% aus einer ethylenisch ungesättigten Säure oder einem Säureanhydrid als Comonomer aufgebaut ist und mindestens ein Polyol enthalten. Bei den Polyolen handelt es sich um substituierte Triazin-, Triazintrion-, Benzol- oder Cyclohexylderivate, wobei die Polyolreste sich stets in 1,3,5-Position der erwähnten Ringe befinden. Trotz einer hohen Trocknungstemperatur werden mit diesen Bindemitteln auf Glasfaservliesen nur geringe Nassreißfestigkeiten erzielt.

Die DE-A-2214450 beschreibt ein Copolymerisat, das aus 80 bis 99 Gew.-% Ethylen und 1 bis 20 Gew.-% Maleinsäureanhydrid aufgebaut ist. Das Copolymerisat wird, zusammen mit einem Vernetzungsmittel, in Pulverform oder in Dispersion in einem wässrigen Medium, zur Oberflächenbeschichtung verwendet. Als Vernetzungsmittel wird ein aminogruppenhaltiger Polyalkohol verwendet. Um eine Vernetzung zu bewirken, muss jedoch auf bis zu 300 °C erhitzt werden.

Aus der US-A 5,143,582 ist die Herstellung hitzebeständiger Vliesmaterialien unter Verwendung eines thermisch aushärtenden, hitzebeständigen Bindemittels bekannt. Das Bindemittel ist frei von Formaldehyd und wird erhalten durch Mischen eines Carbonsäuregruppen, Carbonsäureanhydridgruppen oder Carbonsäuresalzgruppen aufweisenden Polymers und eines Vernetzers. Der Vernetzer ist ein β-Hydroxyalkylamid oder ein Polymer oder Copolymer davon. Das mit dem β-Hydroxyalkylamid vernetzbare Polymer ist beispielsweise aufgebaut aus ungesättigten Mono- oder Dicarbonsäuren, Salzen ungesättigter Mono- oder Dicarbonsäuren oder ungesättigten Anhydriden. Selbsthärtende Polymere werden erhalten durch Copolymerisation der β-Hydroxyalkylamide mit Carboxylgruppen enthaltenden Monomeren.

Gemäß der WO 99/09100 sind thermisch härtbare Zusammensetzungen und deren Verwendung als formaldehydfreie Bindemittel zur Herstellung von Formkörpern offenbart, welche neben einem Alkanolamin mit wenigstens zwei OH-Gruppen, ein Polymerisat 1, welches ≤ 5 Gew.-% und ein weiteres Polymerisat 2, welches ≥ 15 Gew.-% einer $\alpha,\beta$-ethylenisch ungesättigten Mono- oder Dicarbonsäure in einpolymerisierter Form enthält.

Häufig vermögen die mit den vorgenannten Bindemitteln hergestellten Formkörper hinsichtlich ihrer mechanischen Eigenschaften, beispielsweise ihrer Wasseraufnahme nicht immer voll zu befriedigen.

Darüber hinaus ist es dem Fachmann geläufig, auch Di- oder Polyisocyanate, wie beispielsweise polymeres Diphenylmethandiisocyanat als formaldehydfreies Bindemittel für körnige und/oder faserförmige Substrate, insbesondere cellulosehaltige Substrate, wie Holzspäne, Holzfasern oder Sägemehl unter Ausbildung von Holzspanplatten einzusetzen. Aufgrund der großen Klebrigkeit dieser Isocyanatverbindungen müssen bei der Herstellung der Holzspanplatten große Mengen an teuren Trennmitteln, wie beispielsweise spezielle Silikonöle oder Wachse zur Beschichtung der Formpressoberflächen eingesetzt werden, um ein fehlerfreies Ablösen der erhaltenen Holzspanplatte aus der Formpresse sicher zu stellen. In der Regel muss das auf der Oberfläche der Holzspanplatte verbleibende Trennmittel in einem nachgeschalteten Bearbeitungsschritt abgeschliffen werden.

Aufgabe der vorliegenden Erfindung war es, ein alternatives formaldehydfreies Bindemittelsystem für körnige und/oder faserförmige Substrate zur Verfügung zu stellen, durch welches verbesserte mechanische Eigenschaften der Formkörper, insbesondere Holzspanplatten resultieren und durch dessen Verwendung bei der Herstellung der Formkörpern der Einsatz an Trennmitteln vermieden oder zumindest reduziert werden kann.

Demgemäß wurde das eingangs definierte Bindemittelsystem gefunden.

Polymerisat A ist durch radikalische Polymerisation erhältlich und enthält 5 bis 100 Gew.-%, bevorzugt 70 bis 100 Gew.-% und besonders bevorzugt 85 bis 100 Gew.-% wenigstens eines Monomere A1 und dementsprechend 0 bis 95 Gew.-%, bevorzugt 0 bis 30 Gew.-% und insbesondere bevorzugt 0 bis 15 Gew.-% wenigstens eines weiteren, sich von den Monomeren A1 unterscheidenden Monomers A2 in einpolymerisierter Form. Dabei addieren sich die Gesamtmengen der Monomeren A1 und die Gesamtmengen der Monomeren A2 zu 100 Gew.-% (Gesamtmonomerenmenge).

Bei den Monomeren A1 handelt es sich um $\alpha,\beta$-monoethylenisch ungesättigte, insbesondere $C_3$- bis $C_6$-, bevorzugt $C_3$- oder $C_4$-Mono- oder Dicarbonsäuren sowie deren voll- oder teilneutralisierten wasserlöslichen Salze, insbesondere deren Alkalimetall- oder Ammoniumsalze, wie beispielsweise Acrylsäure, Methacrylsäure, Ethylacrylsäure, Itakonsäure, Allylessigsäure, Crotonsäure, Vinylessigsäure, Fumarsäure, Maleinsäure, 2-Methylmaleinsäure sowie die Ammonium-, Natrium- oder Kaliumsalze der vorgenannten Säuren. Die Monomeren A1 umfassen aber auch die Anhydride entsprechender $\alpha,\beta$-monoethylenisch ungesättigter Dicarbonsäuren, wie beispielsweise Maleinsäureanhydrid oder 2-Methylmaleinsäureanhydrid. Bevorzugt ist Monomer A1 ausgewählt aus der Gruppe umfassend Acrylsäure, Methacrylsäure, Crotonsäure, Fumarsäure, Maleinsäure, Maleinsäureanhydrid, 2-Methylmaleinsäure und Itakonsäure, wobei Acrylsäure, Methacrylsäure, Maleinsäure, Maleinsäureanhydrid und/oder Itakonsäure besonders bevorzugt sind.

Als Monomere A2 kommen alle ethylenisch ungesättigten Monomere in Betracht, welche sich von den Monomeren A1 unterscheiden und mit diesen copolymerisierbar sind. Als Monomere A2 beispielhaft genannt seien vinylaromatische Verbindungen, wie Styrol, $\alpha$-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome, bevorzugt 2 bis 12 C-Atome aufweisenden Monocarbonsäuren, wie Vinylacetat, Vinylpropionat, Vinyl-n-butyrat, Vinyllaurat und Vinylstearat, $C_1$- bis $C_{12}$-Alkylvinylether, wie Methylvinylether, Ethylvinylether, n-Propylvinylether, n-Butylvinylether, n-Pentylvinylether, n-Hexylvinylether, Ester aus vorzugsweise 3 bis 6 C-Atome aufweisende $\alpha,\beta$-monoethylenisch ungesättigten Mono- und Dicarbonsäuren, wie insbesondere Acrylsäure, Methacrylsäure, Maleinsäure, Fumarsäure und Itakonsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -isobutyl-, pentyl-, -hexyl-, -heptyl-, -octyl-, -nonyl-, -decyl- und -2-ethylhexylester, Fumar- und Maleinsäuredimethylester oder -di-n-butylester, Nitrile $\alpha,\beta$-monoethylenisch ungesättigter Carbonsäuren, wie Acrylnitril, Methacrylnitril, Fumarsäuredinitril, Maleinsäuredinitril sowie $C_{4-8}$-konjugierte Diene, wie 1,3-Butadien (Butadien) und Isopren in Betracht. Die vorgenannten Monomere bilden in der Regel ≥ 50 Gew.-%, bevorzugt ≥ 80 Gew.-% und insbesondere bevorzugt ≥ 90 Gew.-% der Gesamtmenge aller Monomeren A2. In aller Regel weisen diese Monomere in bei 25 °C und Atmosphärendruck (1 atm = 1,013 bar absolut) eine mäßige bis geringe Löslichkeit, d.h. ≤ 10 g, bevorzugt ≤ 5 g und insbesondere bevorzugt ≤ 2 g pro 100 g entionisiertem Wasser auf.

Weiterhin kommen als Monomere A2 im untergeordnetem Maße solche ethylenisch ungesättigten Monomere in Betracht, die entweder wenigstens eine Sulfonsäuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-lmidazolin-2-onyl)ethylmethacrylat. Die vorgenannten Monomere A2 werden in der Regel in Mengen ≤ 10 Gew.-%, bevorzugt ≤ 8 Gew.-% und insbesondere ≤ 5 Gew.-%, jeweils bezogen auf die Gesamtmenge an Monomeren A2, eingesetzt.

Monomere A2, die üblicherweise die innere Festigkeit der Verfilmungen einer Polymermatrix erhöhen, weisen normalerweise wenigstens eine Hydroxy-, wenigstens eine Epoxy-, wenigstens eine Carbonylgruppe oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylat und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Hydroxyalkylacrylate oder -methacrylate, wie insbesondere 2-Hydroxyethylacrylat, 2-Hydroxyethylmethacrylat, 2-Hydroxypropylacrylat, 2-Hydroxypropylmethacrylat, 4-Hydroxybutylacrylat oder 4-Hydroxybutylmethacrylat, sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat, Triallylisocyanurat, Glycidylacrylat oder Glycidylmethacrylat. Die vorgenannten Monomere A2 werden in der Regel in Mengen ≤ 10 Gew.-%, bevorzugt ≤ 5 Gew.-% und insbesondere ≤ 2 Gew.-%, jeweils bezogen auf die Gesamtmenge an Monomeren A2, eingesetzt. Bevorzugt weisen die Polymerisate A keine derartigen Monomere in einpolymerisierter Form auf.

Bevorzugt ist Monomer A2 ausgewählt aus der Gruppe umfassend Methylacrylat, Ethylacrylat, n-Butylacrylat, 2-Ethylhexylacrylat, Methylmethacrylat und/oder Styrol.

In einer bevorzugten Ausführungsform ist das Polymerisat A in einpolymerisierter Form aufgebaut aus

| 70 bis 100 Gew.-% | wenigstens eines Monomeren A1, und |
| 0 bis 30 Gew.-% | wenigstens eines Monomeren A2. |

In einer besonders bevorzugten Ausführungsform ist das Polymerisat A in einpolymerisierter Form aufgebaut aus

| 85 bis 100 Gew.-% | Acrylsäure, Methacrylsäure, Maleinsäure, Maleinsäureanhydrid und/oder Itakonsäure, und |
| 0 bis 15 Gew.-% | Methylacrylat, Ethylacrylat, n-Butylacrylat, 2-Ethylhexylacrylat, Methylmethacrylat und/oder Styrol. |

Die Herstellung der Polymerisate A ist dem Fachmann geläufig und erfolgt beispielsweise durch radikalische Polymerisation der Monomere A1 und A2 nach der Methode der Substanz-, Emulsions-, Lösungs-, Fällungs- oder Suspensionspolymerisation (siehe hierzu auch die Herstellung der entsprechenden Polymerisate in der WO 99/09100, Seite 5, Zeile 12 bis Seite 13, Zeile 7). Abhängig von der Monomerzusammensetzung wird Polymerisat A jedoch bevorzugt durch radikalisch initiierte wässrige Emulsions- oder Lösungspolymerisation hergestellt. Erfindungsgemäß vorteilhaft wird Polymerisat A daher in einem wässrigen Medium dispergiert oder in einem wässrigen Medium gelöst eingesetzt.

Die Durchführung von radikalisch initiierten Emulsionspolymerisationen von ethylenisch ungesättigten Monomeren in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierten wässrigen Emulsionspolymerisationsreaktionen erfolgen üblicherweise dergestalt, dass man die ethylenisch ungesättigten Monomere unter Mitverwendung von Dispergierhilfsmitteln, im wässrigen Medium in Form von Monomerentröpfchen dispers verteilt und mittels eines radikalischen Polymerisationsinitiators polymerisiert. Die Methode der radikalisch initiierten Emulsionspolymerisation wird vorteilhaft dann angewendet, wenn das Gemisch der Monomeren A1 und A2 im wässrigen Medium eine separate Phase ausbildet.

Die Methode der radikalisch initiierten Lösungspolymerisation wird dagegen vorteilhaft dann angewendet, wenn das Gemisch der Monomeren A1 und A2 im Polymerisationsmedium, insbesondere in einem wässrigen Polymerisationsmedium vollständig löslich ist.

Auch die radikalisch initiierte Lösungspolymerisation ist dem Fachmann geläufig und erfolgt insbesondere in Wasser oder einem organischen Lösungsmittel [siehe beispielsweise A. Echte, Handbuch der Technischen Polymerchemie, Kapitel 6, VCH, Weinheim, 1993 oder B. Vollmert, Grundriss der Makromolekularen Chemie, Band 1, E. Vollmert Verlag, Karlsruhe, 1988; L. Kotzeva, J. Polym. Sci. A-27, 1989 (4), Seiten 1325ff; C. Erbil et al., Polymer 41, 2000, Seiten 1391ff; C. Yang, X. Lu Yun, J. Polym. Sci. 75(2), 2000, Seiten 327ff; M. Sen et al., Polymer 40(9), 1999, Seiten 913ff; F. Wang et al., Anal. Chem. 68, 1996, Seiten 2477ff; J. Velada et al., Macromol. Chem. and Phys. 196, 1995, Seiten 3171ff; J.M. Cowie, C. Haq, Br. Polym. J. 9, 1977, Seiten 241ff; J. Velada et al., Polymer Degradation and Stability 52, 1996, Seiten 273ff; A. Horta et al., Makromol. Chem., Rapid Commun. 8, 1987, Seiten 523ff; T. Hirano et al., J. Polym. Sci. A-38, 2000, Seiten 2487ff; B.E. Tate, Adv. Polymer Sci. 5, 1967, Seiten 214ff]. Erfolgt dabei die Herstellung von Polymerisat A in einem organischen Lösungsmittel, so wird in der Regel das organische Lösungsmittel nach Abschluss der Polymerisation zumindest teilweise, vorteilhaft zu $\geq$ 50 Gew.-% oder $\geq$ 90 Gew.-% und insbesondere vorteilhaft vollständig entfernt und das Polymerisat A in Wasser, vorteilhaft in entionisiertem Wasser aufgenommen. Die entsprechenden Verfahren sind dem Fachmann geläufig. So kann beispielsweise der Austausch des Lösungsmittels gegen Wasser derart erfolgen, dass das Lösungsmittel, beispielsweise bei Normaldruck (1 atm absolut) oder im Unterdruck (< 1 atm absolut) zumindest teilweise, vorteilhaft vollständig in einer oder mehreren Stufen abdestilliert und durch Wasser ersetzt wird. Häufig kann es günstig sein, das Lösungsmittel durch Einleiten von Wasserdampf aus der Lösung zu entfernen und dabei gleichzeitig durch Wasser zu ersetzen. Dies ist insbesondere dann der Fall, wenn das organische Lösungsmittel eine gewisse Wasserdampfflüchtigkeit aufweist.

Vorteilhaft weist Polymerisat A ein gewichtsmittleres Molekulargewicht $\geq$ 1000 g/mol und $\leq$ 1000000 g/mol auf. Günstig ist es, wenn das gewichtsmittlere Molekulargewicht von Polymerisat A $\leq$ 500000 g/mol und besonders vorteilhaft $\leq$ 200000 g/mol ist. Insbesondere vorteilhaft weist Polymererisat A ein gewichtsmittleres Molekulargewicht $\geq$ 3000 g/mol, bevorzugt $\geq$ 5000 g/mol und insbesondere $\geq$ 10000 g/mol auf. Die Einstellung des gewichtsmittleren Molekulargewichts bei der Herstellung von Polymerisat A ist dem Fachmann geläufig und erfolgt vorteilhaft durch radikalisch initiierte wässrige Lösungspolymerisation in Anwesenheit von radikalkettenübertragenden Verbindungen, den sogenannten Radikalkettenreglern. Auch die Bestimmung des gewichtsmittleren Molekulargewichts ist dem Fachmann geläufig und erfolgt beispielsweise mittels Gelpermeationschromatographie.

Durch gezielte Variation von Art und Menge der Monomeren A1 und A2 ist es dem Fachmann erfindungsgemäß möglich, Polymerisate A herzustellen, die eine Glasübergangstemperatur bzw. einen Schmelzpunkt im Bereich von -60 bis 270 °C aufweisen. Erfindungsgemäß vorteilhaft beträgt die Glasübergangstemperatur des Polymerisats A in einer bevorzugten Ausführungsform $\geq$ -20 °C und $\leq$ 110 °C und insbesondere $\geq$ 20 °C und $\leq$ 100 °C.

Dabei ist mit der Glasübergangstemperatur $T_g$, der Grenzwert der Glasübergangstemperatur gemeint, dem diese gemäß G. Kanig (Kolloid-Zeitschrift & Zeitschrift für Polymere, Bd. 190, S. 1, Gleichung 1) mit zunehmendem Molekulargewicht zustrebt. Als Glasübergangstemperatur $T_g$ ist im Rahmen dieser Schrift diejenige Glasübergangstemperatur gemeint, welche nach dem DSC-Verfahren (Differential Scanning Calorimetry, 20 K/min, midpoint-Messung, DIN 53765) ermittelt wurde.

Durch die sogenannte Foxgleichung ist es dem Fachmann möglich, Polymerisate A im geeigneten $T_g$-Bereich zu identifizieren und diese durch geeignete Variation von Art und Menge der Monomeren A1 und A2 gezielt herzustellen.

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g{}^1 + x^2/T_g{}^2 + \dots x^n/T_g{}^n,$$

wobei $x^1$, $x^2$, .... $x^n$ die Massenbrüche der Monomeren 1, 2, .... n und $T_g{}^1$, $T_g{}^2$, .... $T_g{}^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J.Wiley, New York 1975, und 3rd Ed. J. Wiley, New York 1989).

Die erfindungsgemäß eingesetzten wässrigen Polymerisatdispersionen oder -lösungen weisen üblicherweise Polymerfeststoffgehalte an Polymerisat A von $\geq$ 10 und $\leq$ 70 Gew.-%, häufig $\geq$ 20 und $\leq$ 65 Gew.-% und oft $\geq$ 40 und $\leq$ 60 Gew.-%, jeweils bezogen auf die wässrige Polymerisatdispersion bzw. wässrige Polymerisatlösung, auf. Der über quasielastische Lichtstreuung (ISO-Norm 13321) ermittelte zahlenmittlere Teilchendurchmesser der bei einer Emulsionspolymerisation erhaltenen Polymerisate A (cumulant z-average) liegt in der Regel zwischen 10 und 2000 nm, vorteilhaft zwischen 20 und 1000 nm und insbesondere vorteilhaft zwischen 50 und 700 nm bzw. 80 bis 400 nm.

Als Vernetzer B kann erfindungsgemäß prinzipiell jede organische Verbindung eingesetzt werden, welche wenigstens zwei funktionelle Gruppen, ausgewählt aus der Gruppe umfassend Hydroxy-, Epoxy-, primäre und sekundäre Aminogruppen, aufweist. Erfindungsgemäß kann das mittlere Molekulargewicht des Vernetzers B > 1000 g/mol betragen, wobei jedoch Vernetzer B bevorzugt sind, welche ein mittleres Molekulargewicht $\leq$ 1000 g/mol aufweisen.

Beispiele von Vernetzern B mit einem mittleren Molekulargewicht > 1000 g/mol sind Polyethylenglykole, Polypropylenglycole, Polytetramethylendiole, Polyethylenglykoldiglycidylether, Polypropylenglykoldiglycidylether, Polyetheramine, Polyalkylenglykolediamine oder Polyethylenimindiamine.

Erfindungsgemäß bevorzugt werden jedoch Vernetzer B eingesetzt, welche ein mittleres Molekulargewicht ≤ 1000 g/mol aufweisen.

Insbesondere werden Vernetzer B, welche ausgewählt sind aus der Gruppe umfassend Ethanolamin, Diethanolamin, Triethanolamin, 3-Aminopropanol-1, 1-Aminopropanol-2, 5-Aminopentanol-1, 2-(2-Aminoethoxy)-ethanol, Aminoethylethanolamin, Bis-(N-Hydroxyethyl)propandiamin-1,3, Diisopropanolamin, Triisopropanolamin, N-Methyldiethanolamin, N-Butyldiethanolamin, Ethylenglykol, Diethylenglykol, Triethylenglykol, Propandiol-1,2, Propantriol-1,2,3, Butandiol-1,2, Butandiol-1,4, Butandiol-2,3, Neopentylglykol, Trimethylolpropan, Pentandiol-1,2, Pentandiol-1,5, Hexandiol-1,6, 2,5-Dimethylhexandiol-2,5, Ethylendiamin, Diethylentriamin, Triethylentetramin, Propandiamin-1,3, Propandiamin-1,2, Neopentyldiamin, Hexamethylendiamin, Octamethylendiamin, N-(2-Aminoethyl)-propandiamin-1,3, Propantriamin-1,2,3, N,N-Bis-(3-aminopropylamin, Ethylenglykoldiglycidylether, Diethylenglykoldiglycidylether, 1,2-Propylenglykoldiglycidylether und Di-1,2-propylenglykoldiglycidylether.

Insbesondere bevorzugt werden als Vernetzer B Triethanolamin, Diethanolamin, Propantriol-1,2,3, 2,5-Dimethylhexandiol-2,5, Neopentylglykol, N-(2-Aminoethyl)-propandiamin-1,3, Ethylenglykoldiglycidylether und/oder Diethylenglykoldiglycidylether eingesetzt, wobei Triethanolamin insbesondere bevorzugt ist.

Als Isocyanat C können alle organischen Verbindungen eingesetzt werden, welche wenigstens zwei Isocyanatgruppen aufweisen. Erfindungsgemäß kann dabei das mittlere Molekulargewicht des Isocyanats C > 1000 g/mol oder ≤ 1000 g/mol betragen, wobei jedoch häufig Isocyanate C bevorzugt sind, welche ein mittleres Molekulargewicht ≤ 1000 g/mol aufweisen.

Erfindungsgemäß können alle aus dem Stand der Technik für die Herstellung von Polyurethanen bekannten Isocyanate C eingesetzt werden. Vorteilhaft ist das Isocyanat C jedoch ausgewählt aus der Gruppe umfassend aliphatische, cycloaliphatische und α-romatische zwei- oder mehrwertige Isocyanate. Selbstverständlich sollen erfindungsgemäß auch beliebige Mischungen der vorgenannten Isocyanate C umfasst sein. Bevorzugte Beispiele sind 2,2'-, 2,4'- und 4,4'-Diphenylmethandiisocyanat (MDI), die Mischungen aus monomeren Diphenylmethandiisocyanaten und höherkernigen Homologen des Diphenylmethandiisocyanats (PMDI), Isophorondiisocyanat (IPDI) oder dessen Oligomere, 2,4- oder 2,6-Toluylendiisocyanat (TDI) oder deren Mischungen, Tetramethylendiisocyanat oder dessen Oligomere, Hexamethylendiisocyanat (HDI) oder dessen Oligomere, Naphthylendiisocyanat (NDI) oder Mischungen daraus.

Vorteilhaft wird MDI, PMDI, TDI oder deren Mischungen, IPDI oder dessen Oligomere, HDI oder dessen Oligomere oder Mischungen der genannten Isocyanate als Isocyanat C eingesetzt. Die bevorzugt eingesetzten Isocyananate können auch Uretdion-, Allophanat-, Uretonimin-, Harnstoff-, Biuret-, Isocyanurat- oder Iminooxadiazintriongruppen enthalten. Weitere mögliche Isocyanate sind beispielsweise im "Kunststoffhandbuch, Band 7, Polyurethane", Carl Hanser Verlag, 3. Auflage 1993, Kapitel 3.2 und 3.3.2 angegeben. Als Isocyanat C insbesondere bevorzugt wird MDI und/oder PMDI eingesetzt.

Das erfindungsgemäß eingesetzte Isocyanat C wird vorteilhaft in Substanz oder gelöst in einem aprotischen organischen Lösungsmittel eingesetzt, wobei das Isocyanat C insbesondere bevorzugt in Substanz, gegebenenfalls in aufgeschmolzener Form eingesetzt wird.

Das Gewichtsverhältnis von der Gesamtmenge an Polymerisat A zur Gesamtmenge an Vernetzer B beträgt im erfindungsgemäßen Bindemittel in der Regel 100:1bis 1:3, vorteilhaft 20:1 bis 1:2 und insbesondere vorteilhaft 10:1 bis 1:1 (auf Feststoffbasis).

Mit Vorteil werden dabei die Mengen an Polymerisat A und Vernetzer B so gewählt, dass das Verhältnis der Anzahl von Äquivalenten Carboxygruppen des Polymerisats A zu der Anzahl von Äquivalenten der Hydroxy-, Epoxy-, primäre und sekundäre Aminogruppen des Vernetzers B 100:1 bis 1:5, bevorzugt 50:1 bis 1:3 und besonders bevorzugt 10:1 bis 1:2 beträgt (wobei die Anhydridgruppen hierbei als 2 Carboxygruppen berechnet werden). Insbesondere bevorzugt beträgt das Verhältnis der Anzahl von Äquivalenten Carboxygruppen des Polymerisats A zu der Anzahl von Äquivalenten der Hydroxy-, Epoxy-, primäre und sekundäre Aminogruppen des Vernetzers B 0,5 bis 5.

Desweiteren beträgt im erfindungsgemäßen Bindemittel das Gewichtsverhältnis der Summe der Gesamtmengen an Polymerisat A und Vernetzer B zur Gesamtmenge an Isocyanat C [(A+B):C] in der Regel 20:1 bis 1:3, vorteilhaft 15:1 bis 1:2 und insbesondere vorteilhaft 10:1 bis 1:1 (auf Feststoffbasis).

Die vorgenannten Bindemittel können optional zusätzlich noch Phosphor enthaltende Reaktionsbeschleuniger enthalten, wobei deren Menge vorzugsweise ≤ 1,5 Gew.-%, häufig ≤ 1,0 Gew.-%, oft ≤ 0,5 Gew.-% sowie häufige 0,1 Gew.-% und oft ≥ 0,3 Gew.-%, bezogen auf die Summe der Gesamtmengen an Polymerisat A und Vernetzer B (auf Feststoffbasis) beträgt. Phosphor enthaltende Reaktionsbeschleuniger sind beispielsweise in EP-A 583086 und EP-A 651088 offenbart. Es handelt sich dabei insbesondere um Alkalimetallhypophoshpite, -phosphite, -polyphosphate, -dihydrogenphosphate, Polyphosphorsäure, Hypophosphorsäure, Phosphorsäure, Alkylphosphinsäure oder Oligomere bzw. Polymere dieser Salze und Säuren.

Die erfindungsgemäßen wässrigen Bindemittel enthalten jedoch vorzugsweise keine Phosphor enthaltenden Reaktionsbeschleuniger bzw. keine zur Reaktionsbeschleunigung wirksame Mengen einer Phosphor enthaltenden Verbindung. Die erfindungsgemäßen Bindemittel können jedoch dem Fachmann geläufige Veresterungskatalysatoren enthalten, wie beispielsweise Schwefelsäure oder p-Toluolsulfonsäure bzw. Titanate oder Zirkonate.

Die vorgenannten Bindemittel eignen sich vorteilhaft zur Verwendung als Bindemittel für kömige und/oder faserförmige Substrate. Mit Vorteil lassen sich die genannten Bindemittel daher zur Herstellung von Formkörpern aus kömigen und/oder faserförmigen Substraten einsetzen.

Körnige und/oder faserförmige Substrate sind dem Fachmann geläufig. Beispielsweise handelt es sich hierbei um Holzschnitzel, Holzfasern, Holzmehl (Sägespäne) Cellulosefasem, Textilfasern, Kunststofffasern, Glasfasern, Mineralfasern oder Naturfasern wie Jute, Flachs, Hanf, Kenaf, Curaua oder Sisal, aber auch Korkschnitzel sowie andere organische oder anorganische natürliche und/oder synthetische kömige und/oder faserförmige Verbindungen, deren längste Ausdehnung im Falle von körnigen Substraten ≤ 20 mm, bevorzugt ≤ 10 mm und insbesondere ≤ 5 mm beträgt. Selbstverständlich soll der Begriff Substrat auch die aus Fasern erhältlichen Faservliese, wie beispielsweise so genannte genadelte (mechanisch verfestigte) oder chemisch, beispielsweise mit Polyvinylalkohol vorgebundene Faservliese mit umfassen. Vorteilhaft ist das erfindungsgemäße Bindemittel als formaldehydfreies Bindemittelsystem für kömige und/oder faserförmige Substrate geeignet, welche Cellulose, insbesondere Lignocellulose enthalten, wie beispielsweise körnige und/oder faserförmige Substrate aus Holz, Stroh, Schilfrohr, Jute, Flachs, Hanf, Kenaf, Curaua, Sisal und/oder Kork. Dabei soll unter Lignocellulose das cellulosehaltige Strukturgerüst verholzter Pflanzen verstanden werden (siehe beispielsweise das Stichwort "Lignocellulose" in Herder-Lexikon der Biologie, Spektrum Akademischer Verlag GmbH, Heidelberg 2003).

Das Verfahren zur Herstellung eines Formkörpers aus einem körnigen und/oder faserförmigen Substrat und dem vorgenannten Bindemittel erfolgt vorteilhaft dergestalt, dass das erfindungsgemäße Bindemittel auf das körnige und/oder faserförmige Substrat aufgebracht wird, gegebenenfalls das mit dem Bindemittel behandelte körnige und/oder faserförmige Substrat in Form gebracht wird und anschließend das behandelte körnige und/oder faserförmige Substrat einem thermischen Behandlungsschritt bei einer Temperatur ≥ 100 °C unterzogen wird.

Dabei ist es erfindungsgemäß vorteilhaft, wenn das Bindemittel erst unmittelbar vor oder während des Aufbringens auf das körnige und/oder faserförmige Substrat durch Mischen von Polymerisat A, Vernetzer B und Isocyanat C oder eines Gemisches aus Polymerisat A und Vernetzer B mit Isocyanat C erhalten wird. Selbstverständlich kann das Bindemittel auch durch Mischen von Polymerisat A mit einem Gemisch aus Vernetzer B und Isocyanat C erhalten werden. Vorteilhaft wird Polymerisat A in Form einer wässrigen Polymerisatdispersion oder in Form einer wässrigen Polymerisatlösung eingesetzt. Erfolgt das Aufbringen des Bindemittels auf das körnige und/oder faserförmige Substrat beispielsweise in einer Mischtrommel oder einer Mischstrecke, so kann das Polymerisat A, der Vernetzer B und das Isocyanat C an räumlich verschieden angeordneten Stellen in die Mischtrommel oder in die Mischstrecke, beispielsweise beim wässrigen Holzaufschluss in die sogenannte "Blowline" zwischen dem Refiner und dem Trockner eindosiert werden, wobei es von besonderem Vorteil ist, wenn das Isocyanat C zuletzt vor dem Trockner zudosiert wird. Es ist aber auch möglich, das Polymerisat A, insbesondere in Form seiner wässrigen Dispersion oder Lösung mit dem Vernetzer B zu mischen und dieses Gemisch der Mischtrommel oder der Mischstrecke zuzuführen. Es ist selbstverständlich aber auch möglich, das Polymerisat A, insbesondere in Form seiner wässrigen Dispersion oder Lösung, den Vernetzer B und das Isocyanat C in einer Mischkammer, Mischdüse oder einer anderen statischen oder dynamischen Mischeinrichtung erst unmittelbar vor dem Aufbringen auf das körnige und/oder faserförmige Substrat zu mischen. Erfindungsgemäß von besonderem Vorteil ist es, wenn zuerst Polymerisat A und Vernetzer B, bzw. ein Gemisch aus Polymerisat A und Vernetzer B und erst danach in einem separaten Schritt das Isocyanat C auf das körnige und/oder faserförmige Substrat aufgebracht wird. Häufig ist es erforderlich, dass das mit dem Bindemittel behandelte körnige und/oder faserförmige Substrat in Form gebracht wird, beispielsweise in Form von kontinuierlich hergestellten flächigen Holzwerkstoffen und anschließend die mit dem behandelten körnigen und/oder faserförmigen Substrat erhaltene Form einem thermischen Behandlungsschritt bei einer Temperatur ≥ 100 °C unterzogen wird.

Die Behandlung der körnigen und/oder faserförmigen Substrate mit dem erfindungsgemäßen Bindemittel erfolgt in der Regel dergestalt, dass das vorgenannte Bindemittel bei einer Temperatur im Bereich von 10 bis 90 °C und vorteilhaft von 20 bis 50 °C gleichmäßig auf die Oberfläche der körnigen und/oder faserförmigen Substrate aufgebracht wird. Dabei wird die Menge an Bindemittel so gewählt, dass pro 100 g körnigem und/oder faserförmigem Substrat ≥ 0,1 g und ≤ 100 g, bevorzugt ≥ 1 g und ≤ 50 g und insbesondere bevorzugt ≥ 5 g und ≤ 30 g Bindemittel, gebildet aus der Summe der Gesamtmengen an Polymerisat A, Vernetzer B und Isocyanat C (als Feststoff gerechnet) eingesetzt werden. Die Behandlung der körnigen und/oder faserförmigen Substrate ist dem Fachmann geläufig und erfolgt beispielsweise durch Tränkung oder durch Besprühen der körnigen und/oder faserförmigen Substrate.

Nach der Behandlung mit dem Bindemittel wird das körnige und/oder faserförmige Substrat gegebenenfalls in die gewünschte Form gebracht, beispielsweise durch Einbringen in eine beheizbare Presse oder Form. Daran anschließend wird das in Form gebrachte körnige und/oder faserförmige Substrat in einer dem Fachmann geläufigen Art und Weise getrocknet und ausgehärtet.

Häufig erfolgt die Trocknung und die Aushärtung des gegebenenfalls in Form gebrachten körnigen und/oder faserförmigen Substrats in zwei Temperaturstufen, wobei die Trocknungsstufe bei einer Temperatur < 100 °C, bevorzugt ≥ 20 °C und ≤ 70 °C und insbesondere bevorzugt ≥ 30 und ≤ 50 °C und die Aushärtungsstufe bei einer Temperatur ≥ 100 °C, bevorzugt ≥ 130 und ≤ 250 °C und insbesondere bevorzugt ≥ 160 und ≤ 220°C erfolgt.

Die Trocknungsstufe erfolgt dabei vorteilhaft dergestalt, dass bei einer Temperatur < 100°C so lange getrocknet wird, bis das mit dem Bindemittel behandelte und gegebenenfalls in Form gebrachte körnige und/oder faserförmige Substrat, welches häufig noch nicht seine endgültige Form aufweist (entsprechend Rohling oder Halbzeug genannt) eine Restfeuchte ≥ 5 und ≤ 20 Gew.-% aufweist. Dabei wird die Restfeuchte bestimmt, indem zuerst eine Probe (ca. 1 g) des erhaltenen Rohlings bei Raumtemperatur gewogen, diese daran anschließend für 2 Minuten bei 130°C getrocknet und daran anschließend abgekühlt und wieder bei Raumtemperatur gewogen wird. Dabei entspricht die Restfeuchte des Rohlings der Gewichtsdifferenz der Probe vor und nach dem Trocknungsvorgang bei 130°C, bezogen auf das Gewicht der Probe vor dem Trocknungsvorgang multipliziert mit dem Faktor 100.

Der so erhaltene Rohling ist nach Erwärmen auf eine Temperatur < 100°C, bevorzugt ≥ 20 °C und ≤ 90°C und insbesondere bevorzugt ≥ 40 und ≤ 90 °C noch verformbar und kann bei dieser Temperatur in die endgültige Form des gewünschten Formkörpers gebracht werden.

Die nachfolgende Aushärtungsstufe erfolgt vorteilhaft dergestalt, dass der Rohling (Rohling und endgültiger Formkörper weisen gleiche Form auf) bei einer Temperatur ≥ 100°C solange erhitzt wird, bis dieses eine Restfeuchte ≤ 1 Gew.-%, bevorzugt ≤ 0,5 Gew.-% und insbesondere bevorzugt ≤ 0,1 Gew.-% aufweist, wobei das Bindemittel in Folge einer chemischen Veresterungsreaktion aushärtet.

Weisen der Rohling und der erfindungsgemäße Formkörper nicht die gleiche Form auf, so erfolgt die Herstellung der erfindungsgemäßen Formkörpers vorteilhaft dadurch, dass der Rohling in einer Formpresse in den vorgenannten Temperaturbereichen in die endgültige Form gebracht und daran anschließend ausgehärtet wird.

Selbstverständlich ist es aber auch möglich, dass die Trocknungsstufe und die Aushärtungsstufe der Formkörper in einem Arbeitsschritt, beispielsweise in einer Formpresse bei einer Temperatur ≥ 100 °C erfolgen.

Die nach dem erfindungsgemäßen Verfahren zugänglichen Formkörper weisen vorteilhafte Eigenschaften, insbesondere einen verbesserten E-Modul oder eine verringerte Wasseraufnahme im Vergleich zu den Formkörpern des Standes der Technik auf. Desweiteren werden bei der erfindungsgemäßen Herstellung der Formkörper in Formpressen keine oder lediglich geringe Mengen an Trennmitteln benötigt.

Die Erfindung soll anhand nachfolgender nicht einschränkender Beispiele erläutert werden.

Beispiele:

I) Einsatzstoffe

Es wurden folgende Komponenten verwendet:

Substrat:

Fichtenholzfasern mit einer Länge von 2 bis 6 mm und einem Restfeuchtigkeitsgehalt von 4 Gew.-%.

Polymerisat A:

a) Acrylsäure/Maleinsäureanhydrid-Copolmerisat A1 (Gewichtsverhältnis Acrylsäure/Maleinsäureanhydrid = 65:35; gewichtsmittleres Molekulargewicht Mw: 12.800 g/mol)

b) Acrylsäure/Styrol-Copolymerisat A2 (Gewichtsverhältnis Acrylsäure/Styrol = 87:13; gewichtsmittleres Molekulargewicht Mw: 19.100 g/mol)

Vernetzer B:

Triethanolamin (Reinheitsgehalt ≥ 99,5 Gew.-% der Firma BASF SE)

Isocyanat C:

Mischung aus monomeren Diphenylmethandiisocyanaten und höherkernigen Homologen des Diphenylmethandiisocyanats (Lupranat[®] M70R; Produkt der Firma BASF U-rethanes)

Von den Copolymerisaten A1 und A2 wurden bei 20 bis 25 °C (Raumtemperatur) gemeinsam mit Triethanolamin und entionisiertem Wasser homogene wässrige Mischungen hergestellt, welche

39 Gew.-% Copolymerisat A1, 11 Gew.-% Triethanolamin und 50 Gew.-% entionisiertes Wasser (Bindermischung 1), bzw.

42 Gew.-% Copolymerisat A2, 8 Gew.-% Neopentylglykol und 50 Gew.-% entionisiertes Wasser (Bindermischung 2) enthielten.

II) Herstellung der Formkörper

In einem Lödige Pflugscharmischer mit einem Nutzvolumen von 35 Litern wurden 1000 g der Fichtenholzfasern bei Raumtemperatur vorgelegt und der Mischer in Betrieb gesetzt. Über eine Düse wurden dann über einen Zeitraum von 10 Minuten 167 g einer der beiden Bindermischungen kontinuierlich zudosiert und danach noch 5 Minuten nachgemischt. Daran anschließend wurden nach Austausch der Düse über einen Zeitraum von 10 Minuten 20 g des vorgenannten Isocyanats C kontinuierlich zudosiert. Abhängig von den mit den unterschiedlichen Bindermischungen 1 bzw. 2 erhaltenen beschichteten Fichtenholzfasern werden diese als Holzfasermischung 1 bzw. Holzfasermischung 2 bezeichnet.

Analog der voran beschriebenen Vorgehensweise wurden zwei weitere Holzfasermischungen hergestellt, wobei jedoch anstelle von 167 der Bindermischungen 1 bzw. 2 während 10 Minuten insgesamt 207 g der Bindermischungen 1 bzw. 2 während 20 Minuten kontinuierlich zudosiert wurden, während auf die Dosierung des Isocyanats C verzichtet wurde. Die so erhaltenen beschichteten Fichtenholzfasern werden als Holzfasermischung V1 bzw. Holzfasermischung V2 bezeichnet.

Völlig analog zur Herstellung der Holzfasermischungen 1 und 2 wurden zwei weitere Holzfasermischungen hergestellt, wobei jedoch anstelle von 167 g der Bindermischungen 1 bzw. 2 jeweils 167 g einer 50 gew.-%igen wässrigen Lösung des Copolymerisats A1 bzw. Copolymerisats A2 eingesetzt wurden. Die so erhaltenen beschichteten Fichtenholzfasern werden als Holzfasermischung V3 bzw. Holzfasermischung V4 bezeichnet.

In einem weiteren Versuch wurden ebenfalls 1000 g der Fichteholzfasern vorgelegt und dann über einen Zeitraum von 20 Minuten lediglich insgesamt 40 g des vorgenannten Isocyanats C unter homogener Mischung kontinuierlich zudosiert. Auf die Dosierung der Bindermischung 1 bzw. Bindermischung 2 wurde verzichtet. Die dabei erhaltenen beschichteten Fichtenholzfasern werden als Holzfasermischung V5 bezeichnet.

Von den erhaltenen Holzfasermischungen 1 und 2 sowie V1 bis V5 wurden jeweils 90 g abgewogen und gleichmäßig in eine 20 x 20 cm Form einer beheizbaren Presse (Typ WKP 600 / 3,5 / 3, der Fa. Wickert, Deutschland) verteilt. Daran anschließend wurde die Form geschlossen und die geformten Holzfasermischungen 1 und 2 sowie V1 bis V5 bei einer gegebenen Temperatur von 130 °C, 160 °C oder 200 °C und einem Druck von 50 bar (Überdruck) auf eine Dicke von 2 mm gepresst und für eine Zeitdauer von 60 Sekunden in der Pressform belassen. Die erhaltenen Holzfaserplatten werden in Abhängigkeit von der eingesetzten Holzfasermischung als Holzfaserplatten 1 und 2 sowie V1 bis V5 bezeichnet. Dabei von Bedeutung ist jedoch, dass die Holzfaserplatten V5 mit der Pressform verklebten und sich aus dieser nur mit Aufwand herauslösen ließen, während die Holzfaserplatten 1 und 2 sowie V1 bis V4 in einfacher Art und Weise aus der Pressform entnehmen ließen. Daher wurden die Herstellung der Holzfaserplatten mit der Holzfasermischung V5 wiederholt, wobei jedoch die Pressform vor der Befüllung mit der Holzfasermischung V5 mit einer 0,25 mm dicken Teflonfolie ausgekleidet wurde. Nach dem Pressvorgang ließ man die noch heißen Holzfaserplatten 1 und 2 sowie V1 bis V5 in einem Exsikkator bei Unterdruck (10 mbar absolut) auf Raumtemperatur abkühlen. Daran anschließend wurden die 20 x 20 cm großen Holzfaserplatten 1 und 2 sowie V1 bis V5 aus dem Exsikkator entnommen und in ca. 5 x 5 cm große Holzfaserplättchen 1 und 2 sowie V1 bis V5 zersägt. Von diesen Holzfaserplättchen wurde die jeweilige Wasseraufnahme bestimmt.

III) Bestimmung der Wasseraufnahme

Zur Bestimmung der Wasseraufnahme wurden die ca. 5 x 5 cm großen Holzfaserplättchen 1 und 2 sowie V1 bis V5 von anhaftenden Staub befreit, gewogen ($M_{troken}$) und mittels eines Metalldrahtnetzes bei 23 °C für eine Zeit von 2 Stunden bzw. 24 Stunden in einem Wasserbassin in entionisiertes Wasser getaucht. Daran anschließend wurden die Holzfaserplättchen dem Wasserbassin entnommen, anhaftendes Wasser mittels eines trockenen Baumwolltuches entfernt und danach gewogen ($M_{nass}$). Dabei ergibt sich die Wasseraufnahme WA (in Gew.-%) aus der Gewichtsdifferenz der Holzfaserplättchen vor und nach der Wasserlagerung multipliziert mit 100, geteilt durch das Gewicht der Holzfaserplättchen vor der Trocknung [WA = ($M_{nass}$ - $M_{trocken}$) x 100 / $M_{trocken}$]. Es wurden jeweils 4 Messungen durchgeführt. Die in nachfolgender Tabelle 1 angegebenen Werte stellen den Mittelwert dieser 4 Messungen dar.

Tabelle 1: Bestimmung der Wasseraufnahme

| Holzfaserplättchen | Wasseraufnahme | | | | | |
|---|---|---|---|---|---|---|
| | nach 2 Stunden [Gew.-%] Presstemperatur | | | nach 24 Stunden [Gew.-%] Presstemperatur | | |
| | 130 °C | 160 °C | 200 °C | 130 °C | 160 °C | 200 °C |
| 1 | 95 | 28 | 15 | 196 | 79 | 40 |
| 2 | 170 | 101 | 20 | 192 | 112 | 52 |
| V1 | 603 | 61 | 39 | 631 | 74 | 50 |
| V2 | 495 | 119 | 40 | 546 | 127 | 63 |
| V3 | 213 | 57 | 34 | 243 | 103 | 69 |
| V4 | 309 | 137 | 42 | 337 | 145 | 73 |
| V5 | 32 | 28 | 24 | 81 | 78 | 61 |

Wie aus den Ergebnissen klar ersichtlich ist, wiesen die mit den erfindungsgemäßen Bindermischungen hergestellten Holzfaserplättchen 1 und 2 im Vergleich zu den korrespondierenden Holzfaserplättchen V1 bis V4 unabhängig von der Temperatur des Pressvorgangs die niedrigsten Wasseraufnahmen auf. Demgegenüber wiesen die Holzfaserplättchen V5, welche bei einer Presstemperatur von 130 °C und 160 °C hergestellt wurden, deutlich geringere Wasseraufnahmen im Vergleich zu den entsprechenden Wasseraufnahmen der Holzfaserplättchen 1 und 2 auf, während bei einer Presstemperatur von 200 °C die mit den erfindungsgemäßen Bindermischungen hergestellten Holzfaserplättchen 1 und 2 eine deutlich geringere Wasseraufnahme als die Holzfaserplättchen V5 aufwiesen. Darüber hinaus ließen sich die Holzfaserplatten 1 und 2 in einfacher Weise aus der Pressform entnehmen, während im Gegensatz hierzu die Holzfaserplatten V5 bei jeder der angewendeten Presstemperaturen mit der Pressform verklebten, so dass eine dünne Teflonfolie zwischen der Holzfasermischung V5 und der Pressform eingefügt werden musste.

**Patentansprüche**

1. Bindemittel für körnige und/oder faserförmige Substrate, enthaltend als wirksame Bestandteile

   a) ein durch radikalische Polymerisation erhältliches Polymerisat, welches

   5 bis 100 Gew.-%   wenigstens einer ethylenisch ungesättigten $C_3$- bis $C_6$-Mono- oder Dicarbonsäure (Monomer A1), und

   0 bis 95 Gew.-%   wenigstens einer anderen ethylenisch ungesättigten Verbindung, welche mit den Monomeren A1 copolymerisierbar ist (Monomer A2),

   in einpolymerisierter Form enthält, wobei sich die Monomerenmengen A1 und A2 zu 100 Gew.-% addieren [Polymerisat A],
   b) eine organische Verbindung, welche wenigstens zwei funktionelle Gruppen, ausgewählt aus der Gruppe umfassend Hydroxy-, Epoxy-, primäre und sekundäre Aminogruppen, enthält [Vernetzer B], und
   c) eine organische Verbindung, welche wenigstens zwei Isocyanatgruppen enthält [Isocyanat C].

2. Bindemittel nach Anspruch 1, wobei das Polymerisat A in einem wässrigen Medium gelöst oder dispergiert ist.

3. Bindemittel nach einem der Ansprüche 1 oder 2, wobei das Polymerisat A in einpolymerisierter Form aufgebaut ist aus

   70 bis 100 Gew.-%   wenigstens eines Monomeren A1, und
   0 bis 30 Gew.-%   wenigstens eines Monomeren A2.

4. Bindemittel nach Anspruch 1 bis 3, wobei das Polymerisat A in einpolymerisierter Form aufgebaut ist aus

   85 bis 100 Gew.-%   Acrylsäure, Methacrylsäure, Maleinsäure, Maleinsäureanhydrid und/oder Itakonsäure, und

(fortgesetzt)

| | |
|---|---|
| 0 bis 15 Gew.-% | Methylacrylat, Ethylacrylat, n-Butylacrylat, 2-Ethylhexylacrylat, Methylmethacrylat und/oder Styrol. |

**5.** Bindemittel nach einem der Ansprüche 1 bis 4, wobei der Vernetzer B Triethanolamin ist.

**6.** Bindemittel nach einem der Ansprüche 1 bis 5, wobei das Isocyanat C Diphenylmethandiisocyanat und/oder ein höherkerniges Homologes des Diphenylmethandiisocyanats ist.

**7.** Bindemittel nach einem der Ansprüche 1 bis 6, wobei das Gewichtsverhältnis von der Gesamtmenge an Polymerisat A zur Gesamtmenge an Vernetzer B 100:1 bis 1:3 beträgt.

**8.** Bindemittel nach einem der Ansprüche 1 bis 7, wobei das Gewichtsverhältnis der Summe der Gesamtmengen an Polymerisat A und Vernetzer B zur Gesamtmenge an Isocyanat C 20:1 bis 1:20 beträgt.

**9.** Verfahren zur Herstellung eines Formkörpers aus einem körnigen und/oder faserförmigen Substrat, **dadurch gekennzeichnet, dass** ein Bindemittel gemäß einem der Ansprüche 1 bis 8 auf das körnige und/oder faserförmige Substrat aufgebracht wird, gegebenenfalls das mit dem Bindemittel behandelte körnige und/oder faserförmige Substrat in Form gebracht wird und anschließend das behandelte körnige und/oder faserförmige Substrat einem thermischen Behandlungsschritt bei einer Temperatur ≥ 100 °C unterzogen wird.

**10.** Verfahren nach Anspruch 9, **dadurch gekennzeichnet, dass** das Bindemittel erst unmittelbar vor oder während des Aufbringens auf das körnige und/oder faserförmige Substrat durch Mischen von Polymerisat A, Vernetzer B oder eines Gemisches aus Polymerisat A und Vernetzer B mit Isocyanat C erhalten wird.

**11.** Verfahren nach Anspruch 9 oder 10, **dadurch gekennzeichnet, dass** pro 100 g körniges und/oder faserförmiges Substrat ≥ 0,1 g und ≤ 100 g Bindemittel (berechnet als Summe der Gesamtmengen von Polymerisat A, Vernetzer B und Isocyanat C auf Feststoffbasis) eingesetzt werden.

**12.** Verfahren nach einem der Ansprüche 9 bis 11, **dadurch gekennzeichnet, dass** der thermische Behandlungsschritt aus einem Trocknungsschritt und einem Aushärtungsschritt besteht.

**13.** Verfahren nach einem der Ansprüche 9 bis 12, **dadurch gekennzeichnet, dass** das körnige und/oder faserförmige Substrat Cellulose enthält.

**14.** Verfahren nach einem der Ansprüche 9 bis 13, **dadurch gekennzeichnet, dass** das körnige und/oder faserförmige Substrat Lignocellulose enthält.

**15.** Formkörper erhältlich nach einem Verfahren gemäß einem der Ansprüche 9 bis 14.

**Claims**

**1.** A binder for granular and/or fibrous substrates, comprising as active constituents

   a) a polymer obtainable by free-radical addition polymerization and comprising in polymerized form

| | |
|---|---|
| 5% to 100% by weight | of at least one ethylenically unsaturated C3 to C6 mono- or dicarboxylic acid (monomer A1), and |
| 0% to 95% by weight | of at least one other ethylenically unsaturated compound which is copolymerizable with the monomers A1 (monomer A2), |

   the amounts of monomers A1 and A2 adding up to 100% by weight [polymer A],
   b) an organic compound comprising at least two functional groups selected from the group comprising hydroxyl, epoxy, primary amino and secondary amino groups [crosslinker B], and
   c) an organic compound comprising at least two isocyanate groups [isocyanate C].

2. The binder according to claim 1 wherein the polymer A is dissolved or dispersed in an aqueous medium.

3. The binder according to either of claims 1 and 2 wherein the polymer A is constructed in polymerized form of

70% to 100% by weight of at least one monomer A1, and
and
0% to 30% by weight of at least one monomer A2.

4. The binder according to claim 1 or 2 or 3 wherein the polymer A is constructed in polymerized form of

85% to 100% by weight of acrylic acid, methacrylic acid, maleic acid, maleic anhydride and/or itaconic acid, and
0% to 15% by weight of methyl acrylate, ethyl acrylate, n-butyl acrylate, 2-ethyl hexyl acrylate, methyl methacrylate and/or styrene.

5. The binder according to any one of claims 1 to 4 wherein the crosslinker B is triethanolamine.

6. The binder according to any one of claims 1 to 5 wherein the isocyanate C is diphenylmethane diisocyanate and/or a more highly nuclear homolog of diphenylmethane diisocyanate.

7. The binder according to any one of claims 1 to 6 wherein the weight ratio of the total amount of polymer A to the total amount of crosslinker B is in the range from 100:1 to 1:3.

8. The binder according to any one of claims 1 to 7 wherein the weight ratio of the sum total of the total amounts of polymer A and crosslinker B to the total amount of isocyanate C is in the range from 20:1 to 1:20.

9. A process for producing a shaped article from a granular and/or fibrous substrate, which process comprises applying a binder according to any one of claims 1 to 8 to the granular and/or fibrous substrate, optionally shaping the binder-treated granular and/or fibrous substrate, and then subjecting the treated granular and/or fibrous substrate to a thermal treatment step at a temperature $\geq 100°C$.

10. The process according to claim 9 wherein the binder is only obtained immediately before or during the applying to the granular and/or fibrous substrate by mixing polymer A, crosslinker B or a mixture of polymer A and crosslinker B with isocyanate C.

11. The process according to claim 9 or 10 wherein $\geq 0.1$ g and $\leq 100$ g of binder (reckoned as the sum total of the total amounts of polymer A, crosslinker B and isocyanate C, based on solids) is or are used per 100 g of granular and/or fibrous substrate.

12. The process according to any one of claims 9 to 11 wherein the thermal treatment step consists of a drying step and a curing step.

13. The process according to any one of claims 9 to 12 wherein the granular and/or fibrous substrate comprises cellulose.

14. The process according to any one of claims 9 to 13 wherein the granular and/or fibrous substrate comprises lignocellulose.

15. A shaped article obtainable by a process according to any one of claims 9 to 14.

**Revendications**

1. Liant pour substrats particulaires et/ou fibreux, contenant en tant que constituants actifs

   a) un polymère pouvant être obtenu par polymérisation radicalaire, qui contient sous forme copolymérisée

5 à 100 % en poids d'au moins un acide mono- ou dicarboxylique en $C_3$ à $C_6$ éthyléniquement insaturé (monomère A1) et

0 à 95 % en poids d'au moins un autre composé éthyléniquement insaturé qui est copolymérisable avec les monomères A1 (monomère A2),

les quantités des monomères A1 et A2 s'additionnant pour atteindre 100 % en poids [polymère A],

b) un composé organique qui contient au moins deux groupes fonctionnels choisis dans le groupe comprenant les groupes hydroxy, époxy, amino primaires et secondaires [agent de réticulation B] et

c) un composé organique qui contient au moins deux groupes isocyanate [isocyanate C].

2. Liant selon la revendication 1, dans lequel le polymère A est dissous ou dispersé dans un milieu aqueux.

3. Liant selon l'une quelconque des revendications 1 ou 2, dans lequel le polymère A est constitué, sous forme copolymérisée, par

70 à 100 % en poids d'au moins un monomère A1 et

0 à 30 % en poids d'au moins un monomère A2.

4. Liant selon les revendications 1 à 3, dans lequel le polymère A est constitué, sous forme copolymérisée, par

85 à 100 % en poids d'acide acrylique, d'acide méthacrylique, d'acide maléique, d'anhydride de l'acide maléique et/ou d'acide itaconique, et

0 à 15 % en poids d'acrylate de méthyle, d'acrylate d'éthyle, d'acrylate de n-butyle, d'acrylate de 2-éthylhexyle, de méthacrylate de méthyle et/ou de styrène.

5. Liant selon l'une quelconque des revendications 1 à 4, dans lequel l'agent de réticulation B est la triéthanolamine.

6. Liant selon l'une quelconque des revendications 1 à 5, dans lequel l'isocyanate C est le diisocyanate de diphénylméthane et/ou un homologue contenant un nombre supérieur de noyaux du diisocyanate de diphénylméthane.

7. Liant selon l'une quelconque des revendications 1 à 6, dans lequel le rapport en poids entre la quantité totale de polymère A et la quantité totale d'agent de réticulation B est de 100:1 à 1:3.

8. Liant selon l'une quelconque des revendications 1 à 7, dans lequel le rapport en poids entre la somme des quantités totales de polymère A et d'agent de réticulation B et la quantité totale d'isocyanate C est de 20:1 à 1:20.

9. Procédé de fabrication d'un corps moulé à partir d'un substrat particulaire et/ou fibreux, **caractérisé en ce qu'**un liant selon l'une quelconque des revendications 1 à 8 est appliqué sur le substrat particulaire et/ou fibreux, le substrat particulaire et/ou fibreux traité avec le liant est éventuellement mis en forme, puis le substrat particulaire et/ou fibreux traité est soumis à une étape de traitement thermique à une température ≥ 100 °C.

10. Procédé selon la revendication 9, **caractérisé en ce que** le liant n'est obtenu qu'immédiatement avant ou pendant l'application sur le substrat particulaire et/ou fibreux par mélange du polymère A, de l'agent de réticulation B ou d'un mélange du polymère A et de l'agent de réticulation B avec l'isocyanate C.

11. Procédé selon la revendication 9 ou 10, **caractérisé en ce que**, pour 100 g de substrat particulaire et/ou fibreux, ≥ 0,1 g etc 100 g de liant (calculé en tant que somme des quantités totales du polymère A, de l'agent de réticulation B et de l'isocyanate C en termes de solides) sont utilisés.

12. Procédé selon l'une quelconque des revendications 9 à 11, **caractérisé en ce que** l'étape de traitement thermique est constituée par une étape de séchage et une étape de durcissement.

13. Procédé selon l'une quelconque des revendications 9 à 12, **caractérisé en ce que** le substrat particulaire et/ou fibreux contient de la cellulose.

14. Procédé selon l'une quelconque des revendications 9 à 13, **caractérisé en ce que** le substrat particulaire et/ou fibreux contient de la lignocellulose.

15. Corps moulé pouvant être obtenu par un procédé selon l'une quelconque des revendications 9 à 14.

**EP 2 576 163 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 4076917 A
- EP 445578 A
- EP 583086 A
- EP 651088 A
- EP 672920 A
- DE 2214450 A
- US 5143582 A
- WO 9909100 A
- DE 4003422 A

### In der Beschreibung aufgeführte Nicht-Patentliteratur

- Encyclopedia of Polymer Science and Engineering. 1987, vol. 8, 659 ff
- **D.C. BLACKLEY.** *High Polymer Latices,* 1966, vol. 1, 35 ff
- **H. WARSON.** The Applications of Synthetic Resin Emulsions. 1972, 246 ff
- **D. DIEDERICH.** *Chemie in unserer Zeit,* 1990, vol. 24, 135-142
- Emulsion Polymerisation. Interscience Publishers, 1965
- **F. HÖLSCHER.** Dispersionen synthetischer Hochpolymerer. Springer-Verlag, 1969
- **A. ECHTE.** Handbuch der Technischen Polymerchemie. VCH, 1993
- **B. VOLLMERT.** Grundriss der Makromolekularen Chemie. E. Vollmert Verlag, 1988, vol. 1
- **L. KOTZEVA.** *J. Polym. Sci. A,* 1989, vol. 27 (4), 1325ff
- **C. ERBIL et al.** *Polymer,* 2000, vol. 41, 1391ff
- **C. YANG ; X. LU YUN.** *J. Polym. Sci.,* 2000, vol. 75 (2), 327ff
- **M. SEN et al.** *Polymer,* 1999, vol. 40 (9), 913ff
- **F. WANG et al.** *Anal. Chem.,* 1996, vol. 68, 2477ff
- **J. VELADA et al.** *Macromol. Chem. and Phys.,* 1995, vol. 196, 3171ff
- **J.M. COWIE ; C. HAQ.** *Br. Polym. J.,* 1977, vol. 9, 241ff
- **J. VELADA et al.** *Polymer Degradation and Stability,* 1996, vol. 52, 273ff
- **A. HORTA et al.** *Makromol. Chem., Rapid Commun.,* 1987, vol. 8, 523ff
- **T. HIRANO et al.** *J. Polym. Sci. A,* 2000, vol. 38, 2487ff
- **B.E. TATE.** *Adv. Polymer Sci.,* 1967, vol. 5
- Kolloid-Zeitschrift & Zeitschrift für Polymere. vol. 190, 1
- **T.G. FOX.** *Bull. Am. Phys. Soc.,* 1956, vol. 1, 123
- Ullmann's Encyclopädie der technischen Chemie. Verlag Chemie, 1980, vol. 19, 18
- Ullmann's Ecyclopedia of Industrial Chemistry. VCH, 1992, vol. A21, 169
- **J. BRANDRUP ; E.H. IMMERGUT.** Polymer Handbook. J. Wiley, 1966
- POLYMER HANDBOOK. J.Wiley, 1975
- POLYMER HANDBOOK. J. Wiley, 1989
- Kunststoffhandbuch, Band 7, Polyurethane. Carl Hanser Verlag, 1993, vol. 7
- Lignocellulose. **STICHWORT.** Herder-Lexikon der Biologie. Spektrum Akademischer Verlag GmbH, 2003